(19) Europäisches Patentamt
European Patent Office
Office européen des brevets

(11) **EP 4 711 753 A1**

(12) **EUROPEAN PATENT APPLICATION**
published in accordance with Art. 153(4) EPC

(43) Date of publication:
**18.03.2026  Bulletin 2026/12**

(21) Application number: **24803405.0**

(22) Date of filing: **26.04.2024**

(51) International Patent Classification (IPC):
**G01N 27/333** (2006.01)    **G01N 27/416** (2006.01)

(52) Cooperative Patent Classification (CPC):
**B01J 19/00; G01N 27/333; G01N 27/416**

(86) International application number:
**PCT/JP2024/016378**

(87) International publication number:
**WO 2024/232292 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **10.05.2023   JP 2023078162**

(71) Applicant: **Canon Kabushiki Kaisha
Tokyo, 146-8501 (JP)**

(72) Inventors:
• **FUKATSU Makoto
Tokyo 146-8501 (JP)**

• **MIURA Jun
Tokyo 146-8501 (JP)**
• **YAMAMOTO Takeshi
Tokyo 146-8501 (JP)**
• **MAEDA Harunobu
Tokyo 146-8501 (JP)**
• **TANAKA Masanori
Tokyo 146-8501 (JP)**
• **ENOKIDO Fuka
Tokyo 146-8501 (JP)**
• **MIYAZAKI Keiji
Tokyo 146-8501 (JP)**

(74) Representative: **TBK
Bavariaring 4-6
80336 München (DE)**

(54) **ANALYSIS DEVICE**

(57)    A purpose is to provide an analytical device capable of maintaining good measurement sensitivity even after long-term storage and obtaining a proper potential for selected ions.

Provided is an analytical device comprising: a porous substrate; an electrode formed in an inside of, on a surface of, or from the inside to the surface of the porous substrate; an ion selective membrane covering the electrode; and a protective layer, wherein the ion selective membrane comprises a plasticizer; and the protective layer is formed in the inside of the porous substrate as close to at least a portion of the ion selective membrane and comprises a component inhibiting penetration of the plasticizer.

FIG. 1A

**Description**

[Technical Field]

The present invention relates to an analytical device in which a channel region is formed in an inside of a porous substrate.

[Background Art]

In recent years, analytical devices that can efficiently perform biochemical analyses in a single chip using small microchannels have attracted attention in a wide range of fields. Specifically, small analytical devices are attracting attention not only in biochemistry research but also in various fields such as medicine, drug discovery, healthcare, environment, and food.

In the first half of the 1990s, microanalysis chips were developed in which micrometer-sized microchannels were formed on glass or silicon using photolithography or molds, and sample pretreatment, stirring, mixing, reaction, and detection were performed on a single chip. As a result, miniaturization of the inspection system, rapid analysis, and reduction of specimens and waste liquid were realized.

Electrochemical analysis measures the concentration or the like of an object by measuring the electric potential between electrodes immersed in a specimen to be analyzed and is widely used in medical and environmental fields. Conventional electrochemical analysis is performed by an engineer using sophisticated instrumentation, which limits to some extent the field and resources to perform the measurement. However, there is a need for inexpensive, easy-to-handle, disposable microanalytical chips for electrochemical analysis for use in medical treatment in developing countries, remote areas, and disaster areas where medical equipment is not sufficient, or in airports where the spread of infectious diseases must be stopped at the border.

In Patent Literature 1, it is proposed that a device including a microanalysis chip capable of potentiometric measurement using a porous substrate, which enables electrochemical measurement at low cost, easy handling, and high disposal. The device includes one or more working electrodes and one reference electrode on a porous substrate, and a configuration for performing potentiometric measurements between an ion-selective electrode using an ion selective membrane as the working electrode and the reference electrode is described. The ion selective membrane of the device also typically comprises a lipophilic ion acceptor (ionophore) and, in an optimized molar ratio, a lipophilic ion exchanger, both incorporated into a polymeric membrane matrix such as plasticized poly (vinyl chloride) (PVC), with which the potential difference can be measured.

In Non-Patent Literature 1, it is proposed that a filter paper-based measuring device for measuring the concentrations of Na ions and K ions. This device has a dispensing part for dispensing a specimen, and when the dispensed specimen penetrates from the dispensing part to the regions of the working electrode and the reference electrode, both electrodes are electrically connected to enable potentiometric measurement. And the ion selective membrane of this device is prepared by using DOS/NPOE as a plasticizer for Na ions and K ions in addition to ionophore, anion removing agent and PVC, and the potential difference can be measured by using such the ion selective membrane.

And, in Non-Patent Literature 1, it is described that a KCl ion crystal is deposited on the reference electrode to obtain a stable potential at the reference electrode. As a result, KCl is dissolved in the specimen during measurement, Cl ions in the reference electrode region are held at a high concentration, and a stable potential of the reference electrode can be obtained. Further, in Non-Patent Literature 1, only ions to be measured are selected by an ion selective membrane formed to cover the working electrode, so that measurement can be performed without being affected by other ions.

[Citation List]

[Patent Literature]

PTL 1: U.S. Patent Application Publication No. 2016/033438

[Non-Patent Literature]

NPL 1: Nipapan Ruecha, Orawon Chailapakul, Koji Suzuki and Daniel Citterio, "Fully Inkjet-Printed Paper-Based Potentiometric Ion-Sensing Devices", Analytical chemistry August 29, 2017 Published, 89, pp.10608-10616

[Summary of Invention]

[Technical Problem]

However, in the composition of the analytical device using the porous substrate as described above, the performance may not be maintained during long-term storage. Specifically, in an analytical device using a porous substrate, an electrode and an ion selective membrane are formed on the porous substrate, and the ion selective membrane is partially in contact with the porous substrate. Further, the ion selective membrane contains a plasticizer which is a lipophilic ion exchanger, and to have a function of transporting the ionophore at the time of measurement, and the plasticizer is usually a liquid at the time of measurement (above normal temperature) and can flow in the ion selective membrane. Therefore, the plasticizer seeps out of the ion selective membrane during long-term storage. When the seeping plasticizer encounters the porous substrate, the seeping of the plasticizer is accelerated by the capillary phenomenon of the porous substrate, and the plasticizer may further diffuse toward the porous substrate. Therefore, the amount of the plasticizer in the ion selective membrane is reduced, and the material ratio in the ion selective membrane cannot be kept in an appropriate state, and as a result, the responsiveness of the specimen to the ion concentration, that is, the measurement sensitivity is changed, and the potential on the working electrode side may be changed even for a specimen of the same concentration.

This problem is more likely to occur especially in long-term storage under high temperature environment because of the influence of the fluidity of the plasticizer in the ion selective membrane. Therefore, by setting the storage environment of the analytical device at a low temperature such as 10°C or lower, the occurrence of the problem can be reduced. On the other hand, to store the analytical device at a low temperature, storage equipment and power supply equipment are required, and the device may not be used depending on the medical field environment such as POCT. Therefore, there is a need for chips that can perform more stable analysis even after long-term storage, even if they are not stored at low temperatures.

In view of the above, it is an object of the present invention to provide an analytical device for measuring an electrolyte concentration, which can maintain good measurement sensitivity even after long-term storage and can obtain an appropriate potential for selected ions.

[Solution to Problem]

According to one aspect of the present invention,

provided is
an analytical device comprising:

a porous substrate,
an electrode formed in an inside of, on a surface of, or from the inside to the surface of the porous substrate,
an ion selective membrane covering the electrode; and
a protective layer,
wherein the ion selective membrane comprises a plasticizer; and
wherein the protective layer is formed in the inside of the porous substrate as close to at least a portion of the ion selective membrane and comprises a component inhibiting penetration of the plasticizer.

[Advantageous Effects of Invention]

According to the present invention, it is possible to provide an analytical device for electrolyte concentration measurement which can maintain good measurement sensitivity even during long-term storage and can obtain an appropriate potential for selected ions.

[Brief Description of Drawings]

[Fig. 1A]

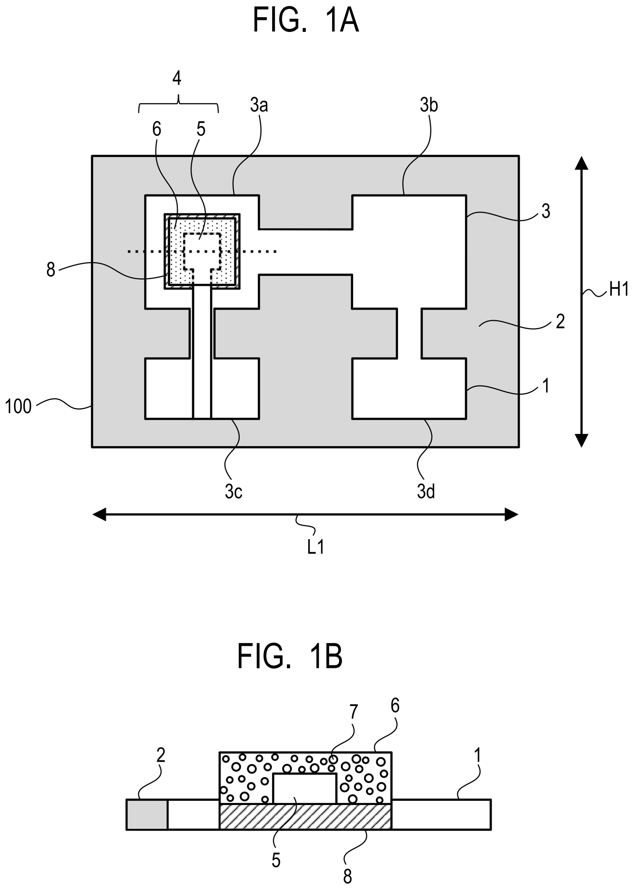

Fig. 1A is a schematic view for illustrating an analytical device of Example 1.
[Fig. 1B]
Fig. 1B is a cross-sectional view taken along the dotted line of Fig. 1A.
[Fig. 2A]

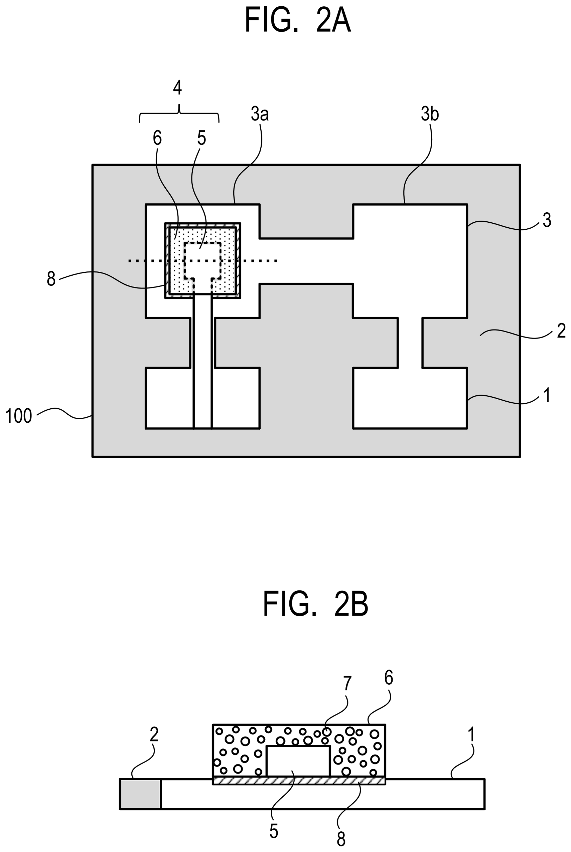

Fig. 2A is a schematic view for showing an analytical device of a variation of Example 1.
[Fig. 2B]

Fig. 2B is a cross-sectional view taken along the dotted line in Fig. 2A.
[Fig. 3]

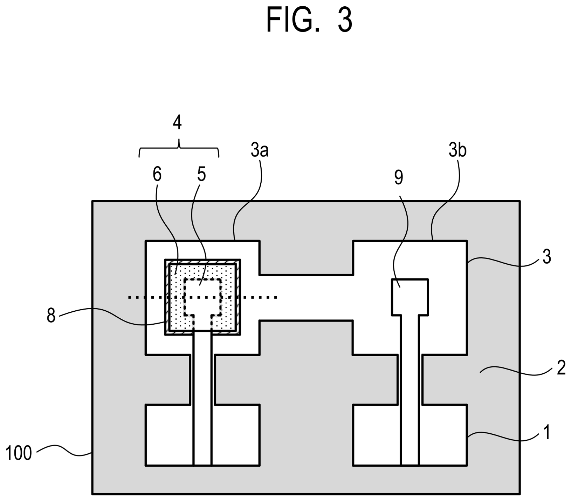

Fig. 3 is a schematic view for explaining an analytical device of Example 1.
[Fig. 4A]

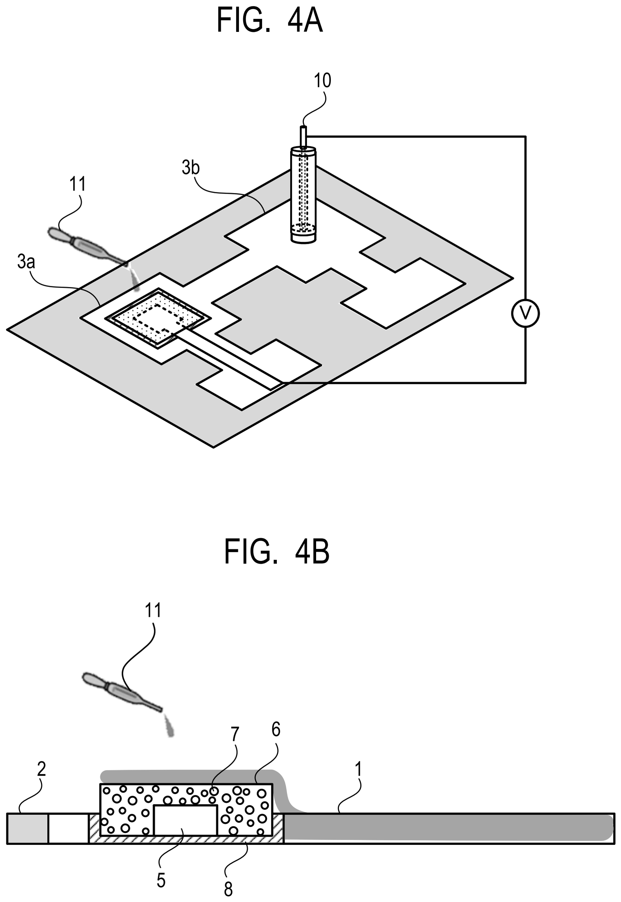

Fig. 4A is a schematic view for showing an example of potentiometric measurement of an analytical device.
[Fig. 4B]
Fig. 4B is a schematic view for illustrating the state when the specimen is dispensed into the analytical device.
[Fig. 5A]

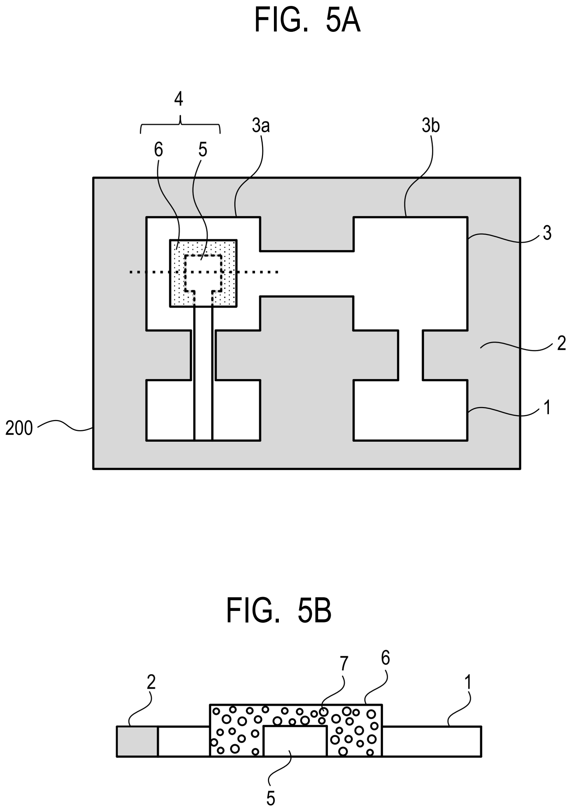

Fig. 5A is a schematic view for explaining an analytical device of comparative example of the present invention.
[Fig. 5B]
Fig. 5B is a cross-sectional view taken along the dotted line in Fig. 5A.
[Fig. 6A]

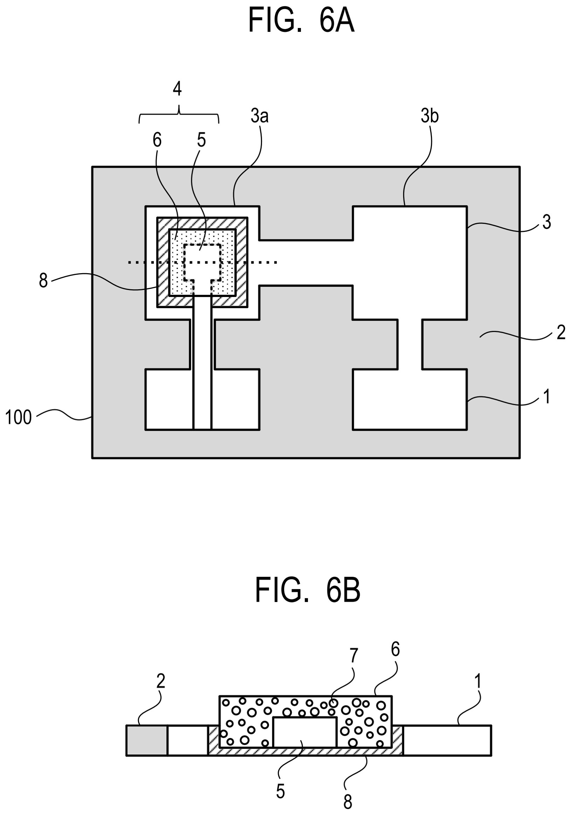

Fig. 6A is a schematic view for showing an analytical device of Example 2 and Example 4.
[Fig. 6B]
Fig. 6B is a cross-sectional view taken along the dotted line of Fig. 6A.
[Fig. 7A]

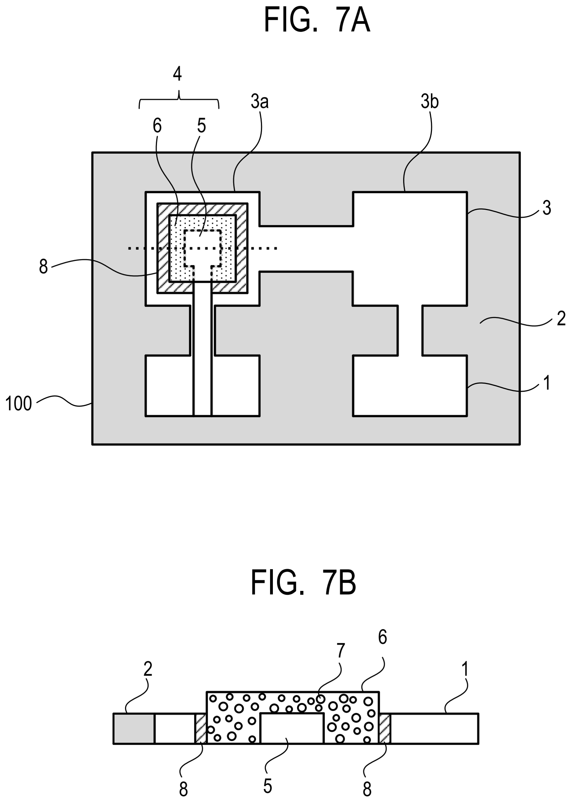

Fig. 7A is a schematic view for showing an analytical device of a variation of Example 3.
[Fig. 7B]
Fig. 7B is a cross-sectional view taken along the dotted line of Fig. 7A.
[Fig. 8A]

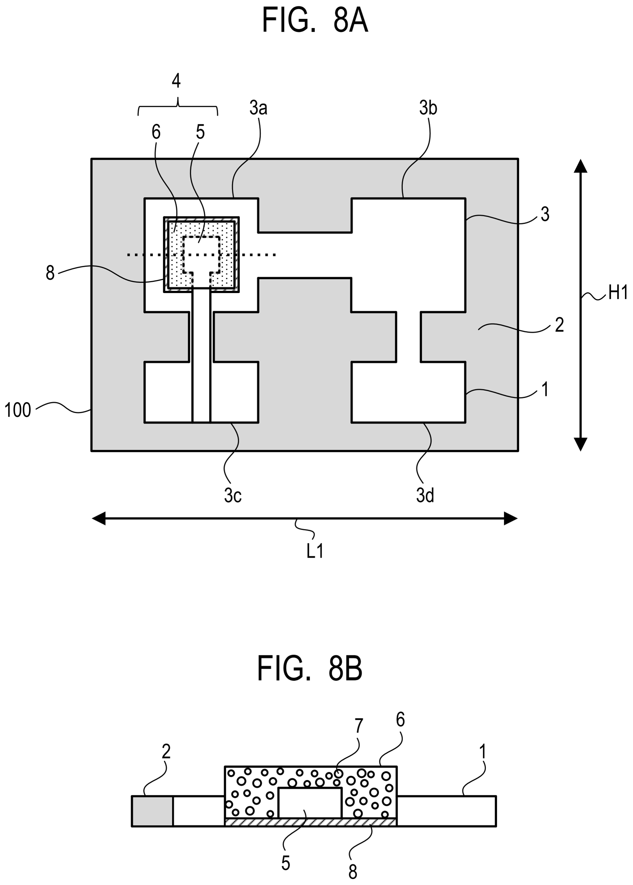

Fig. 8A is a schematic view for showing an analytical device of Example 5.
[Fig. 8B]
Fig. 8B is a cross-sectional view taken along the dotted line of Fig. 8A.
[Fig. 9A]

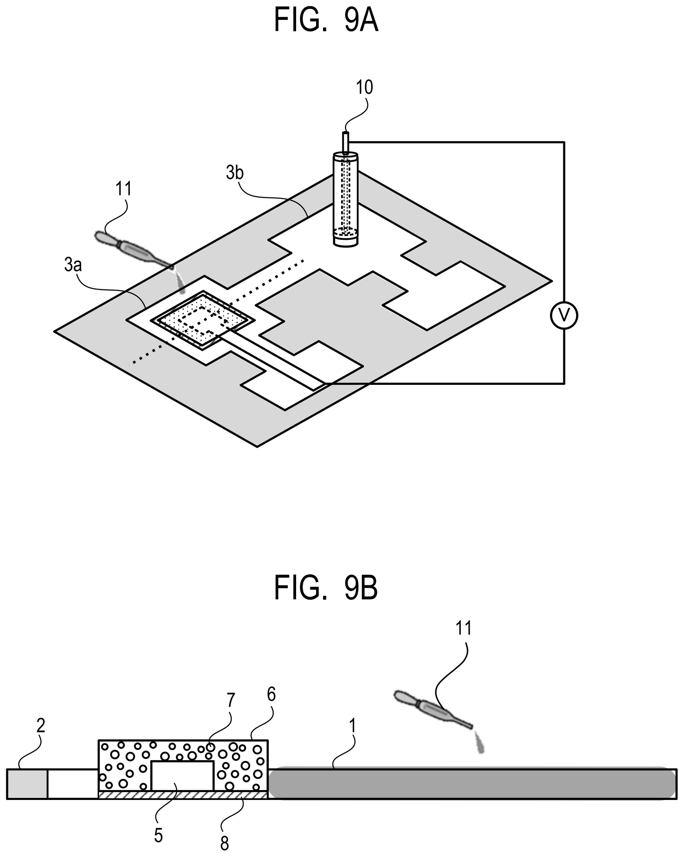

Fig. 9A is a schematic view for showing a state of measurement of a specimen using the analytical device of Example 5.
[Fig. 9B]
Fig. 9B is a cross-sectional view taken along the dotted line of Fig. 9A.
[Fig. 10]

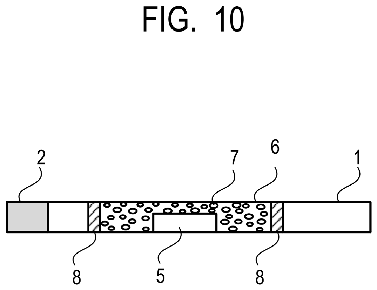

Fig. 10 is a schematic view for showing a modification of the analytical device.

[Description of Embodiments]

An embodiment of the present invention provides an analytical device comprising: a porous substrate; an electrode formed in an inside of, on a surface of, or from the inside to the surface of the porous substrate; an ion selective membrane covering the electrode; and a protective layer, wherein the ion selective membrane comprises a plasticizer; and the protective layer is formed in the inside of the porous substrate as close to at least a portion of the ion selective membrane and comprises a component inhibiting penetration of the plasticizer.

The analytical device may comprise a channel region (sometimes simply referred to as a channel) enclosed by a channel wall formed in the inside of the porous substrate. In this case, the electrode, the ion selective membrane, and the protective layer are formed in the channel region. The channel region includes a first channel chamber, a second channel chamber, and a channel connecting them, wherein the electrode, the ion selective membrane, and the protective layer are formed in the first channel chamber, and the second channel chamber may include a reference electrode.

The ion selective membrane can be formed in an inside of, on a surface of, or from the inside to the surface of the porous substrate and comprises a plasticizer.

The protective layer is formed as close to at least a portion of at least any of the backside or periphery of the ion selective membrane. The back side refers to the side opposite to the front side. In the present specification, the terms "close" and "as close" refer to the case where they are adjacent, or the case where they are not adjacent but exist in the vicinity. The protective layer is formed as close to at least a portion of the ion selective membrane, such as the bottom surface and periphery of the electrode or the ion selective membrane. The protective layer inhibits the penetration of the plasticizer contained in the ion selective membrane and inhibits the plasticizer in the ion selective membrane from seeping and diffusing into the porous substrate through voids in the porous substrate and fibers constituting the porous substrate. Therefore, the protective layer is preferably made of a material with which the plasticizer is incompatible. The protective layer preferably comprises a resin, and polyimide resin and fluorine resin can be cited as such a preferable resin. The polyimide resin is preferably a resin comprising a polymer compound containing an imide bond (-CO-NR-CO-). The fluorine resin is a resin comprising a fluoroalkylene structure, and preferably a resin comprising a repeating structure of -(CF)- or -(CF2)-. Alternatively, the protective layer can be formed by printing and further heating the resin particles. In this case, toner particles can be cited as a preferable example of the resin particles.

Examples and comparative examples of the present invention will be described below with reference to the drawings. The following examples are exemplary, and the present invention is not limited to the embodiments. In the following figures, components not necessary for the description of the embodiment are omitted from the figures.

[Example 1]

The configuration of the analytical device of this example will be described with reference to the drawings.

Figs. 1A and 1B show the analytical device 100 of Example 1. The analytical device 100 has a channel region 3 enclosed by a channel wall 2 provided in an inside of a porous substrate 1. The analytical device 100 had a lateral width L1=22 mm and a longitudinal width H1=17 mm. The channel region 3 has a first channel chamber 3a and a second channel chamber 3b each having a square dimension of 6 mm, and a third channel chamber 3c and a fourth channel chamber 3d each having a width of 6 mm and a height of 3 mm as contact points of the base electrodes, and further a channel path having a width of 6 mm and a height of 4 mm connecting the first channel chamber 3a and the second channel chamber 3b, and a channel path having a width of 2 mm and a height of 3 mm connecting the first channel chamber 3a and the third channel chamber 3c, and the second channel chamber 3b and the fourth channel chamber 3d. The third channel chamber 3c and the fourth channel chamber 3d may be provided from the viewpoint of the adhesion between the substrate and the electrode, but they may be omitted. A working electrode 4 is arranged in the first channel chamber 3a, and the working electrode 4 is composed of a base electrode 5 of 2 mm square connected to the third channel chamber and an ion selective membrane 6 of 4 mm square provided to cover the base electrode 5. A plasticizer 7 is contained in the ion selective membrane 6. In the working electrode 4, a protective layer 8 is arranged on the back surface of a portion of the analytical device 100 where the ion selective membrane 6 of the working electrode 4 exists. In this example, the protective layer 8 is not actually visible from the upper surface because it is on the back surface of the ion selective membrane 6 but is shown for convenience in Fig. 1A.

Fig. 1B is a cross-sectional view of the dotted portion of Fig. 1A in the analytical device 100.

The specific configuration and manufacturing method of the analytical device of this example will be described. In this example, filter paper having a thickness of 100 $\mu$m and a porosity of 50% was used as the porous substrate 1. By using the filter paper as the porous substrate, a capillary phenomenon can be generated with respect to a liquid, and the specimen to be measured can flow in the channel even under an electroless environment.

Although filter paper is used as the porous substrate in the present example, the present invention is not limited to this, and any material which can generate a capillary phenomenon with respect to a liquid may be used. For example, the porous substrate may have a porous body therein, such as continuous foams, nanofibers, and mesh structures, and may be used resin, glass, inorganic substrate, fabric, metal paper, or the like.

The thickness of the porous substrate 1 is 100 $\mu$m, but is not limited to this, and can be appropriately selected according to the purpose, but about 20 $\mu$m to 300 $\mu$m is often used. If the thickness is 20 $\mu$m or less, the strength of the substrate may not be maintained. Further, when the thickness is 300 $\mu$m or more, the material in the ion selective membrane 6, the protective layer 8, and the like easily diffuses into the analytical device, and dimensional accuracy may be deteriorated, but depending on the application, the thick porous substrate 1 having a thickness of about 600 $\mu$m may be used by adjusting the arrangement in the analytical device.

The channel region 3 was formed by the method described in Japanese Patent Laid-Open No. 2021-37612. Specifically, a desired channel pattern was formed on a porous substrate in an unfixed state by an electrophotographic method using channel wall-forming particles T1 (toner) characterized in meltability, and then heated by an oven, a heater, or the like to permeate the channel pattern into the porous substrate, thereby forming a channel wall 2 and forming a channel region 3.

In this example, particles T1 having a number average particle diameter of 6.5 $\mu$m produced by the following production method were used as the particles for forming the channel wall. The production method of particles T1 will be described below.

<Production of particles T1 >

[Preparation of polymerizable monomer composition]

The following composition was mixed and then dispersed in a ball mill for 3 hours.

- Styrene 70.0 parts
- n-butyl acrylate 30.0 parts
- Divinylbenzene 0.1 parts
- Polyester resin 5.0 parts

(Polycondensate of propylene oxide modified bisphenol A and isophthalic acid (Glass transition temperature: 65°C; weight average molecular weight (Mw): 10,000; number average molecular weight (Mn): 6000))

The obtained dispersion was transferred to a reactor equipped with a propeller stirring blade, heated to 60°C while stirring at 300 rpm, and then 3.0 parts of 2,2'-azobis (2,4-dimethylvaleronitrile) was added and dissolved to obtain a polymerizable monomer composition.

[Preparation of aqueous dispersion media]

710 parts of ion-exchanged water and 450 parts of 0.1 mol/L-sodium phosphate aqueous solution were added to a 2-L four-neck flask fitted with a high-speed stirring device T.K. Homomixer (manufactured by PRIMIX Corporation), and the mixture was heated to 60°C while stirring at 12000 rpm. An aqueous dispersion medium containing calcium phosphate (a poorly water-soluble dispersion stabilizer) was prepared by adding 68.0 parts of a 1.0 mol/L-calcium chloride aqueous solution to the solution.

[Granulation and polymerization]

The polymerizable monomer composition was charged into the aqueous dispersion medium, the rotation speed was maintained at 12000 rpm, and 10 parts of t-butyl peroxypivalate as a polymerization initiator were developed and granulated for 15 minutes. Thereafter, the agitator was replaced with a propeller agitator blade from a high-speed agitator, the internal temperature was maintained at 60°C, and the polymerization reaction was continued for 5 hours, and then the internal temperature was raised to 80°C and maintained, and the polymerization reaction was continued for another 3 hours. After completion of the polymerization reaction, the residual monomer was distilled off at 80°C under reduced pressure, and then cooled to 30°C to obtain a polymer fine particle dispersion.

[Washing]

The polymer fine particle dispersion was transferred to a washing vessel, and the pH was adjusted to 1.5 by adding dilute hydrochloric acid while stirring. The dispersion was stirred for 2 hours and then subjected to solid-liquid separation by a filter to obtain polymer fine particles. This was charged into 1200 parts of ion-exchanged water, stirred, and made into a dispersion liquid again, and then subjected to solid-liquid separation by a filter. This operation was carried out three times to obtain a mother particle of particle T1.

[External addition]

Further, 1.0 parts of a fluidity improver (silica having a number average particle diameter of 7 nm of primary particles) surface-treated with hexamethyldisilazane was dry-mixed with 100.0 parts of the obtained mother particles for 5 minutes with a Henschel mixer. Then, particles T1 for forming a channel pattern image having a number average particle diameter D1 of 6.5 $\mu$m were obtained.

The method of forming the channel is not limited to the method of this example. Any method may be used as long as it is possible to form a channel pattern, and other methods may be used, such as cutting the porous substrate 1 and leaving only the channel shape, or forming the channel wall 2 by a wax printer.

Next, a protective layer, which is a feature of the present invention, will be described.

In this example, channel wall forming particles T1 (toner) were used as the material of the protective layer 8. As a manufacturing method, the channel wall 2 was formed by pattern drawing on the portion where the ion selective membrane 5 was formed on the porous substrate 1 in an electrophotographic manner similar to the above-described channel wall forming step. Here, it is preferable that as many particles for forming the channel wall as possible penetrate into the porous substrate in the protective layer portion from the viewpoint of sealing the porous substrate. Therefore, the channel wall pattern drawing forming process by the electrophotographic method and the permeation process into the porous substrate by an oven or a heater were repeated four times so that the pattern drawing amount of the channel wall 2 in the protective layer 8 portion was larger than the pattern drawing amount of the channel wall 2 in the channel wall forming process. That is, the protective layer contained approximately four times as many particles for forming the channel wall as the channel wall. The formed protective layer pattern is as shown in Figs. 1A and 1B.

In the present example, the protective layer forming step is performed after the channel wall forming step, but the pattern formation in the channel wall forming step and the pattern formation in the protective layer forming step may be performed simultaneously. In this case, since there is a limit to the transfer amount of the channel wall-forming particles to the porous substrate, the protective layer forming step may be additionally performed as necessary to increase the drawing amount of the protective layer portion, as in this example.

Further, in the present example, toner which is particles for forming the channel wall is used as the material of the protective layer 8, but the present invention is not limited thereto. It is sufficient that the protective layer 8 can seal the region where the ion selective membrane 6 and the porous substrate 1 are close to each other. An analytical device of a variation of Example 1 is shown in Figs. 2A and 2B. For example, as shown in the cross-sectional view of Fig. 2B, a known toner which is less likely to penetrate into the porous substrate 1 may be arranged as a protective layer in advance at a portion where the ion selective membrane 6 and the porous substrate 1 come into contact with each other. When the porous substrate 1 on which the protective layer is formed is turned over and the base electrode 5 and the ion selective membrane 6 are formed thereon, the structure shown in Fig. 8B can be adopted, for example. In addition, by more locally drawing the toner, a protective layer can be formed around the ion selective membrane, as shown in Fig. 7B. Further, by locally increasing or decreasing the drawing amount, for example, as shown in Fig. 6B, a protective layer can be formed on the back surface and the periphery of the ion selective membrane. The thickness of the protective layer (the thickness in the direction perpendicular to the surface of the device) is preferably 10 $\mu$m or more, and there is no particular upper limit, when the protective layer is disposed on the back surface of the ion selective membrane. If the thickness of the protective layer is 10 $\mu$m or less, the penetration of the plasticizer may not be sufficiently inhibited. When the protective layer is disposed around the ion selective membrane, the width of the protective layer is preferably adjusted so that the specimen dropped on the ion selective membrane can migrate to the porous substrate. As shown in Fig. 10, when the ion selective membrane is formed in the inside of the porous substrate, the width of the protective layer (thickness in the surface direction of the device) is preferably 1 mm or less. When the ion selective membrane is located on the surface of the substrate, as shown in Fig. 4B, the upper limit of the width of the protective layer can be set to 2 mm because the specimen moves using the height difference between the ion selective membrane and the porous substrate.

In this example, as shown in Fig. 1B, a protective layer is arranged in the inside of the porous substrate in the ion selective membrane forming portion, but the protective layer is not limited to this, and as in the example described later, it is possible to reduce the diffusion of the plasticizer 7 contained in the ion selective membrane 6 to the porous substrate 1 by filling the periphery of the region where the ion selective membrane 6 and the porous substrate 1 come into contact with each other with the protective layer.

Next, the working electrode 4 was formed on the channel pattern 3 formed by screen printing, an ink jet apparatus, a dispenser, or the like.

In this example, as shown in Fig. 1A, an Ag/AgC1 electrode was printed on the channel pattern 3 by screen printing as the base electrode 5 of the working electrode. Next, NaCl as an intermediate layer (not shown) was formed on the base electrode 5 by an ink jet method, and then an ion selective membrane 6 having selectivity for target ions was laminated to form a solid contact type ion selective electrode as the working electrode 4. In the present example, an ion selective electrode using Na ions as target ions is used.

As the base electrode 5, known electrodes using Ag/AgCl, carbon, PEDOT/PSS or the like are used without being particularly limited. As to the manufacture of an electrode using Ag/AgCl or carbon, for example, reference can be made to Patent Literature 1. For the manufacture of an electrode using PEDOT/PSS, for example, reference can be made to Non-Patent Literature 1. The base electrode may be selected according to the necessary characteristics of the device such as cost and performance, and in this example, the Ag/AgC1 electrode is used as the base electrode 5.

The intermediate layer may be any generally used layer and an electrolyte such as NaCl or KCl may be used. In this example, a NaCl aqueous solution was coated by an ink jet method.

The ion selective membrane 6 may be any generally used membrane having sensitivity to target ions and sufficient selectivity to interfering ions.

The material used for the ion selective membrane may be any commonly used material. The ion selective membrane preferably contains an ionophore exhibiting ion selectivity and an anion removing agent. As the ionophore, 12 crown 4 ether having a crown ether structure can be exemplified, and as the anion removing agent, sodium tetraphenylborate (NaTPB) can be exemplified. The above materials were also used in this example. As the material used for the ion selective membrane, known materials can be used, and as the materials, for example, reference can be made to pages 138 to 140 of "I Want to Measure Ion Concentration by Electrode" published by DOJINDO LABORATORIES Co., Ltd.

Further, to maintain the structure of the ion selective membrane, a polymer agent is included in the ion selective membrane. Examples of the polymer agent include polyvinyl chloride (abbreviated as PVC) and a copolymer of vinyl chloride and vinyl acetate. In this example, polyvinyl chloride was used.

In addition, the ion selective membrane also includes a plasticizer 7 to enable the ionophore to operate. Although known plasticizers can be applied as plasticizers 7, lipophilic ion exchange materials which act as lipophilic ion exchange in ion selective membranes are more preferable, and examples of known materials include 2-nitrophenyloctyl ether (abbreviated as NPOE), bis (2-ethylhexyl) sebacate (abbreviated as DOS), bis (2-ethylhexyl) adipate (abbreviated as DOA), di-n-octylphenylphosphonate (abbreviated as DOPP), and the like. In this example, DOS was used as the plasticizer 7.

The above components are mixed in an appropriate amount, dissolved or dispersed in THF or cyclohexanone as a solvent, the obtained solution is applied on a base electrode (Ag/AgCl electrode) on which an intermediate layer such as NaCl is laminated by an ink jet method, whereby the ion selective membrane 6 can be produced.

In addition, the coating method of the ion selective membrane 6 is not limited to the inkjet method, but a dispenser, screen printing, or the like may be used as appropriate. The ion selective membrane 6 may be laminated on the base electrode 5 after adjusting the viscosity of the solution according to each coating method.

Although the configuration and manufacturing method of the working electrode according to the present invention have been described in the present example, as shown in Fig. 3, a configuration in which a reference electrode 9 is provided in addition to the working electrode 4 and a potential difference between the two electrodes is used to measure the electrolyte of the specimen may be used. In this figure, a case is shown in which the reference electrode comprises only an electrode. As for the configuration and manufacturing method of the reference electrode, known ones can be used, and description thereof will be omitted.

Next, a method for measuring the electrolyte concentration of a specimen using the analytical device of the present invention will be described.

In this example, to focus only on the performance of the working electrode, as shown in Fig. 4A, a commercially available reference electrode 10 was placed on one side where the reference electrode was formed in the main analytical device, the reference electrode 10 and the working electrode 4 were connected by a specimen, and the potential difference between the two electrodes was measured.

In addition, in the present example, a specimen was dispensed onto the surface of the working electrode 4 and measured. As shown in Figs. 4A and 4B, after the specimen 11 is dispensed onto the surface of the ion selective membrane 6 in the first channel chamber 3a, it flows by capillary action, passes through a channel connecting the first channel chamber 3a and the second channel chamber 3b, and reaches the reference electrode portion of the second channel chamber 3b. Thus, the reference electrode 10 and the working electrode 4 are electrically connected by the specimen 11, and the potential difference is measured.

In this example, the Na concentration of the specimen 11 to be dispensed was varied from $10^{-5}$ mol/L to 1 mol/L and measured, the potential difference between the reference electrode 10 and the working electrode 4 was plotted, and the slope thereof was calculated as the sensitivity.

Next, a method for evaluating the long-term storage performance of the analytical device will be described.

In this embodiment, as an accelerated test for long-term storage, the analytical device was stored in a constant temperature and humidity chamber at 55°C and 30% for 3 months, and the change in sensitivity to Na ions before and after storage was evaluated.

The evaluation results of the accelerated test were as follows:
If the absolute value of the percentage change in sensitivity before and after storage was less than 1%, it was judged as good; if it was 1% to less than 2%, it was judged as fair; and if it was 2% or more, it was judged as poor. In addition, the absolute value of the ratio of sensitivity change is obtained by the following equation (1).

$$100 \times |\text{Sensitivity after storage - Sensitivity before storage}|/\text{Sensitivity before storage} \cdots \text{ equation (1)} \qquad \text{equation (1)}$$

Further, to compare the effects of the present example, a similar evaluation was performed using the analytical device 200 having the configuration shown in Figs. 5A and 5B as a comparative example.

The configuration of the analytical device 200 of the comparative example is the same as that of Example 1 except that the protective layer 8 is not provided. The evaluation results are shown in Table 1.

In the case of using the analytical device 200 of the comparative example, the sensitivity greatly increased after storage, but in the case of using the analytical device 100 of Example 1, it can be seen that the change in sensitivity is suppressed.

In the analytical device according to Example 1, since the protective layer 8 is arranged in the inside of the porous substrate 1 on the back surface of the ion selective membrane 6 forming portion, the portion where the ion selective membrane 6 and the porous substrate 1 come into direct contact with each other can be reduced. Further, since the inside of the porous substrate 1 is filled and sealed with the protective layer 8, the layer acts to prevent the plasticizer 7 in the ion selective membrane 6 from leaking and diffusing into the porous substrate 1 through voids in the porous substrate 1 and fibers constituting the porous substrate 1.

The contact angle of the protective layer portion of this example with water was measured using a contact angle meter (DropMaster, manufactured by Kyowa Interface Science Co., Ltd.). The results are shown in Table 1.

The contact angle of the protective layer 8 of the analytical device 100 of Example 1 to the water was larger than that of the analytical device 200 without the protective layer of the comparative example. Since the surface free energy of the protective layer 8 part is lowered and the wettability of the plasticizer 7 to the porous substrate 1 is thereby lowered, the penetration of the plasticizer 7 to the porous substrate 1 can be reduced in the protective layer 8 part.

[Example 2]

In the present example, the protective layer portion is filled with a polyimide resin in and around the inside where the ion selective membrane of the porous substrate is arranged, in place of the channel wall forming particles used in Example 1.

In this example, as shown in Figs. 6A and 6B, the channel pattern 3 was formed on the porous substrate 1 by the same method as in Example 1, and then the base electrode 5, the intermediate layer, and the ion selective membrane 6 were formed. Thereafter, polyimide varnish (varnish made by dissolving KPI-MX300 F in methyl ethyl ketone; manufactured by Kawamura Sangyo Co., Ltd.,) was drawn on the back surface of the porous substrate 1 on which the ion selective membrane 6 was arranged (a position indicated by a hatched line in Fig. 6B) by an ink jet method, and dried at 150°C to form a polyimide membrane in the inside and the periphery of the porous substrate 1 on which the ion selective membrane 6 was arranged, thereby forming a protective layer 8. The evaluation results of this example are shown in Table 1.

[Example 3]

In the present example, a protective layer is formed by filling the vicinity and periphery of the protective layer portion with a porous substrate ion selective membrane in place of the polyimide used in Example 2 with a fluorine resin.

In this example, as shown in Figs. 7A and 7B, the channel pattern 3, the base electrode 5, the intermediate layer, and the ion selective membrane 6 were formed on the porous substrate 1 by the same method as in Example 2. Thereafter, a fluorine resin (SFCOAT: SFE-B002H manufactured by AGC Seimi Chemical Co., Ltd.) was drawn by an inkjet method on the position shown by hatched lines in Fig. 7B of the porous substrate on which the ion selective membrane 6 was arranged, that is, on the vicinity and periphery of the porous substrate 1 on which the ion selective membrane 6 was arranged, and dried naturally at room temperature to form a fluoropolymer membrane to form a protective layer 8. The evaluation results of this example are shown in Table 1.

[Example 4]

In this example, instead of the polyimide used in Example 2, a protective layer is formed by filling a fluorine resin in the inside, in the vicinity of, and around where the ion selective membrane of the porous substrate is arranged.

In this example, as shown in Figs. 6A and 6B, the channel pattern 3, the base electrode 5, the intermediate layer, and the ion selective membrane 6 were formed on the porous substrate 1 by the same method as in Example 2. Thereafter, a fluorine resin (Somaflon AF, manufactured by SOMAR CORPORATION) was drawn on the porous substrate 1 on which the ion selective membrane 6 was arranged by an inkjet method at a position indicated by a hatched line in Fig. 6B, and dried naturally at room temperature to form a fluoropolymer membrane as a protective layer. The evaluation results of this example are shown in Table 1.

[Example 5]

The present example differs from Example 4 in the arrangement of the protective layer. The difference is that the protective layer is formed by filling a fluorine resin in the inside where an ion selective membrane of a porous substrate is arranged.

In this example, as shown in Figs. 8A and 8B, the channel pattern 3, the base electrode 5, the intermediate layer, and the ion selective membrane 6 were formed on the porous substrate 1 by the same method as in Example 2. Thereafter, a fluorine resin (Somaflon AF, manufactured by SOMAR CORPORATION) was drawn on the porous substrate 1 on which the ion selective membrane 6 was arranged by an inkjet method at a position indicated by a hatched line in Fig. 8B, and dried naturally at room temperature to form a fluoropolymer membrane as a protective layer, which was used as a protective layer.

Further, in the present example, as shown in Figs. 9A and 9B, a specimen was dispensed onto the surface of the channel between the working electrode and the reference electrode, and measurement was performed. The specimen 11, after being dispensed between the channels connecting the first channel chamber 3a and the second channel chamber 3b, flows by capillary action and reaches the side surface portion of the working electrode 4 in the first channel chamber 3a and the reference electrode portion of the second channel chamber 3b. Thus, the commercially available reference electrode 10 and the working electrode 4 are connected by the specimen 11, and the potential difference is measured. The evaluation results of this example are shown in Table 1.

[Table 1]

Table 1

|  | Example 1 | Example 2 | Example 3 | Example 4 | Example 5 | Comparative Example |
|---|---|---|---|---|---|---|
| Contact angle of protective layer portion | 89.3 | 101 | 110.2 | 132.6 | 132.9 | 45 |
| Sensitivity change % | Fair -1.08% | Good -0.31% | Good -0.46% | Good -0.15% | Good -0.79% | Bad -4.94% |

Each example will be described with reference to Table 1.

The contact angle of the protective layer portion is higher than the contact angle of the porous substrate in any of the examples compared to the comparative example in which the protective layer is not present in the region close to the ion selective membrane. That is, it can be seen that the contact angle at the protective layer portion increases and the surface free energy decreases.

Further, in Example 3, since the protective layer is not provided on the back surface of the ion selective membrane, which is a portion where the ion selective membrane and the porous substrate come into contact with each other, the degree of diffusion of the plasticizer into the porous substrate increases, and the ratio of sensitivity change is larger than that in Example 2 and Example 4. However, it can be seen that an effect of suppressing the outflow of the plasticizer from the ion selective membrane can be obtained at least in the case where the protective layer is provided in the vicinity thereof. Therefore, the arrangement of the protective layer is not limited to the position shown in this example but may be provided in a region close to the ion selective membrane, such as the periphery or the back surface thereof.

In the close region, it is more preferable to arrange the protective layer at the contact portion between the ion selective membrane and the porous substrate, because the plasticizer flowing out from the ion selective membrane can be prevented from permeating and diffusing to the porous substrate side by the capillary phenomenon, by arranging the protective layer so as to further reduce the contact area between the ion selective membrane and the porous substrate.

The material of the protective layer is not limited to the material shown in the present example, and any known material can be used. By providing the protective layer, the pores in the porous substrate can be sealed, the contact angle of the porous substrate can be increased, and the surface free energy can be lowered to further suppress the penetration of the plasticizer, so it is preferable. The contact angle of the protective layer portion is preferably higher than the contact angle of the porous substrate 1, more specifically, from the viewpoint of lowering the surface free energy, preferably 80° or more, and more preferably 100° or more.

The thickness of the protective layer is not particularly specified, but when the protective layer is arranged around the vicinity of the ion selective membrane as in Example 4, it is more preferable to set the thickness of the protective layer so that the height of the protective layer is lower than the height of the ion selective membrane in order to facilitate the connection of the measured specimen between the ion selective membrane and the channel during measurement. However, the ion selective membrane does not necessarily have to protrude above the surface of the porous substrate but may be disposed in the inside of the porous substrate and surrounded by a protective layer, as shown in Fig. 10. In such a case, the width of the surrounding protective layer is preferably 1 mm or less in order to facilitate the connection of the measured specimen between the ion selective membrane and the channel.

The present invention is not limited to the above embodiments, and various modifications and variations are possible without departing from the spirit and scope of the present invention. Accordingly, the following claims are attached to make the scope of the invention public.

The present application claims priority based on Japanese Patent Application No. 2023-078162 filed on May 10, 2023, the description of which is incorporated herein by reference in its entirety.

[Reference Signs List]

1 porous substrate
2 channel wall
3 channel region (channel pattern)

4      working electrode
5      base electrode
6      ion selective membrane
7      plasticizer
8      protective layer
9      reference electrode
10     commercially available reference electrode
11     specimen
100    analytical device

**Claims**

1.  An analytical device comprising:

    a porous substrate,
    an electrode formed in an inside of, on a surface of, or from the inside to the surface of the porous substrate,
    an ion selective membrane covering the electrode; and
    a protective layer,
    wherein the ion selective membrane comprises a plasticizer; and
    wherein the protective layer is formed in the inside of the porous substrate as close to at least a portion of the ion selective membrane and comprises a component inhibiting penetration of the plasticizer.

2.  The analytical device of claim 1, that comprises a channel region enclosed by a channel wall formed in the inside of the porous substrate.

3.  The analytical device of claim 2, wherein the electrode, the ion selective membrane, and the protective layer are formed in the channel region.

4.  The analytical device of any one of claims 1 to 3, wherein the plasticizer is a lipophilic ion exchange material.

5.  The analytical device of any one of claims 1 to 4, wherein the protective layer comprises at least a resin.

6.  The analytical device according to any one of claims 1 to 5, wherein the protective layer comprises a material with which the plasticizer is incompatible.

7.  The analytical device according to any one of claims 1 to 6, wherein the protective layer comprises at least a fluorine resin.

8.  The analytical device according to any one of claims 1 to 7, wherein the contact angle of the protective layer portion is higher than the contact angle of the porous substrate.

# FIG. 1A

# FIG. 1B

# FIG. 2A

# FIG. 2B

# FIG. 3

# FIG. 4A

# FIG. 4B

## FIG. 5A

## FIG. 5B

# FIG. 6A

# FIG. 6B

# FIG. 7A

# FIG. 7B

# FIG. 8A

# FIG. 8B

# FIG. 9A

# FIG. 9B

# FIG. 10

## INTERNATIONAL SEARCH REPORT

| International application No. |
|---|
| **PCT/JP2024/016378** |

| **A.** | **CLASSIFICATION OF SUBJECT MATTER** |
|---|---|

***G01N 27/333***(2006.01)i; ***G01N 27/416***(2006.01)i
FI:   G01N27/333 331F; G01N27/333 331M; G01N27/333 331C; G01N27/416 361A

According to International Patent Classification (IPC) or to both national classification and IPC

| **B.** | **FIELDS SEARCHED** |
|---|---|

Minimum documentation searched (classification system followed by classification symbols)

G01N27/26-27/49

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| A | JP 2023-048923 A (CANON KABUSHIKI KAISHA) 07 April 2023 (2023-04-07)<br>entire text, all drawings | 1-8 |
| A | KRIKSTOLAITYTE, V. et al., Paper as sampling substrates and all-integrating platforms in potentiometric ion determination, Trends in Analytical Chemistry, 2020, vol. 133, 116070<br>entire text, all drawings | 1-8 |
| A | US 2016/0033438 A1 (PRESIDENT AND FELLOWS OF HARVARD COLLEGE) 04 February 2016 (2016-02-04)<br>entire text, all drawings | 1-8 |
| A | RUECHA, Nipapan et al., Fully Inkjet-Printed Paper-Based Potentiometric Ion-Sensing Devices, Analytical Chemistry, vol. 89, 2017, pp. 10608-10616<br>entire text, all drawings | 1-8 |
| A | US 2018/0136160 A1 (UNIVERSITY OF CENTRAL FLORIDA RESEARCH FOUNDATION) 17 May 2018 (2018-05-17)<br>paragraph [0004] | 1-8 |

☑ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 711 753 A1

**INTERNATIONAL SEARCH REPORT**

International application No.

**PCT/JP2024/016378**

### C. DOCUMENTS CONSIDERED TO BE RELEVANT

| Category* | Citation of document, with indication, where appropriate, of the relevant passages | Relevant to claim No. |
|---|---|---|
| P, A | JP 2023-160684 A (CANON KABUSHIKI KAISHA) 02 November 2023 (2023-11-02) entire text, all drawings | 1-8 |
| P, A | JP 2023-163784 A (CANON KABUSHIKI KAISHA) 10 November 2023 (2023-11-10) entire text, all drawings | 1-8 |
| P, A | JP 2023-156182 A (CANON KABUSHIKI KAISHA) 24 October 2023 (2023-10-24) entire text, all drawings | 1-8 |

Form PCT/ISA/210 (second sheet) (July 2022)

**INTERNATIONAL SEARCH REPORT**
Information on patent family members

International application No.

**PCT/JP2024/016378**

| Patent document cited in search report | | | Publication date (day/month/year) | Patent family member(s) | | | Publication date (day/month/year) |
|---|---|---|---|---|---|---|---|
| JP | 2023-048923 | A | 07 April 2023 | WO | 2023/054095 | A1 | |
| US | 2016/0033438 | A1 | 04 February 2016 | WO | 2014/149611 | A1 | |
| US | 2018/0136160 | A1 | 17 May 2018 | WO | 2016/141337 | A1 | |
| JP | 2023-160684 | A | 02 November 2023 | WO | 2023/204088 | A1 | |
| JP | 2023-163784 | A | 10 November 2023 | WO | 2023/210332 | A1 | |
| JP | 2023-156182 | A | 24 October 2023 | WO | 2023/199694 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016033438
- JP 2021037612 A
- JP 2023078162 A

**Non-patent literature cited in the description**

- **NIPAPAN RUECHA** ; **ORAWON CHAILAPAKUL** ; **KOJI SUZUKI** ; **DANIEL CITTERIO**. Fully Inkjet-Printed Paper-Based Potentiometric Ion-Sensing Devices. *Analytical chemistry*, 29 August 2017, vol. 89, 10608-10616
- DropMaster. Kyowa Interface Science Co., Ltd.
- Somaflon AF. SOMAR CORPORATION